(19)

Europäisches Patentamt

European Patent Office

Office européen des brevets

(11) **EP 4 535 244 A1**

(12) **EUROPEAN PATENT APPLICATION**
published in accordance with Art. 153(4) EPC

(43) Date of publication:
09.04.2025 Bulletin 2025/15

(21) Application number: 22943721.5

(22) Date of filing: 25.05.2022

(51) International Patent Classification (IPC):
*G06N 20/00* (2019.01)        *G06F 9/46* (2006.01)
*G06N 3/08* (2023.01)

(52) Cooperative Patent Classification (CPC):
G06F 9/46; G06N 3/08; G06N 20/00

(86) International application number:
PCT/JP2022/021390

(87) International publication number:
WO 2023/228317 (30.11.2023 Gazette 2023/48)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: NIPPON TELEGRAPH AND
TELEPHONE CORPORATION
Chiyoda-ku, Tokyo 100-8116 (JP)

(72) Inventors:
• FUKAMI, Takumi
  Musashino-shi, Tokyo 180-8585 (JP)
• TYOU, Iifan
  Musashino-shi, Tokyo 180-8585 (JP)
• NIWA, Kenta
  Musashino-shi, Tokyo 180-8585 (JP)

(74) Representative: MERH-IP Matias Erny Reichl
Hoffmann
Patentanwälte PartG mbB
Paul-Heyse-Straße 29
80336 München (DE)

(54) **FEDERATED LEARNING SYSTEM, MODEL TRAINING DEVICE, FEDERATED LEARNING METHOD, AND MODEL TRAINING PROGRAM**

(57)     A federated learning system includes a plurality of model learning apparatus. Each model learning apparatus is connected to any of the other model learning apparatus via a network. The model learning apparatus includes a mini-batch extraction unit, a model parameter update unit, a dual-variable calculation/transmission unit, a dual-variable reception unit, and a dual-variable setting unit. The model parameter update unit is configured to perform learning using a dual variable, a step size, a mini-batch of model training data, a constraint parameter, and a coefficient $\gamma$ using a predetermined optimal value $\eta$ and a predetermined hyperparameter $\alpha$, thereby updating a model parameter. The dual-variable calculation/transmission unit is configured to calculate and transmit a dual variable using the model parameter updated by the model parameter update unit and a coefficient $\gamma$ for each other model learning apparatus connected to the model learning apparatus.

FIG. 3

EP 4 535 244 A1

**Description**

[Technical Field]

The present invention relates to a federated learning system including a plurality of model learning apparatus, in which each model learning apparatus is connected to any of the other model learning apparatus via a network, a model learning apparatus, a federated learning method, and a model learning program.

[Background Art]

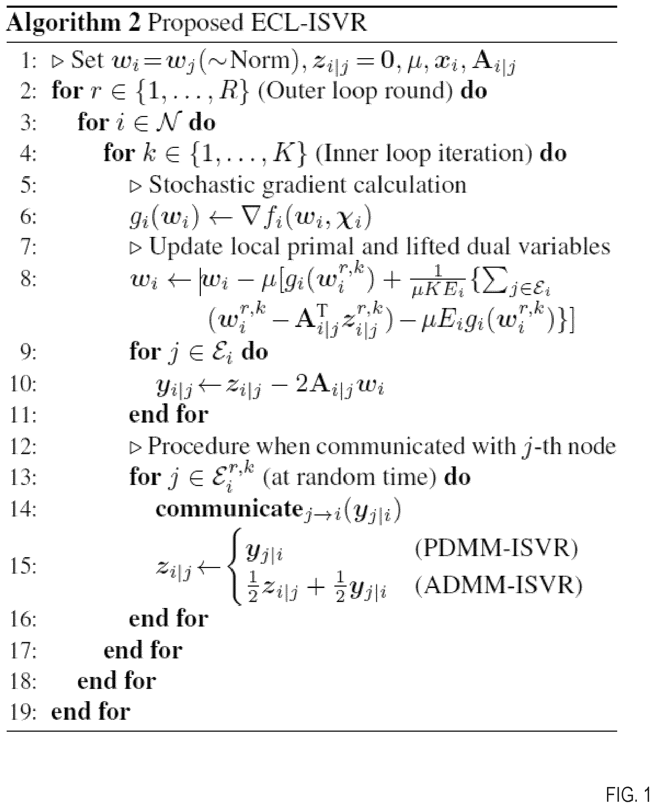

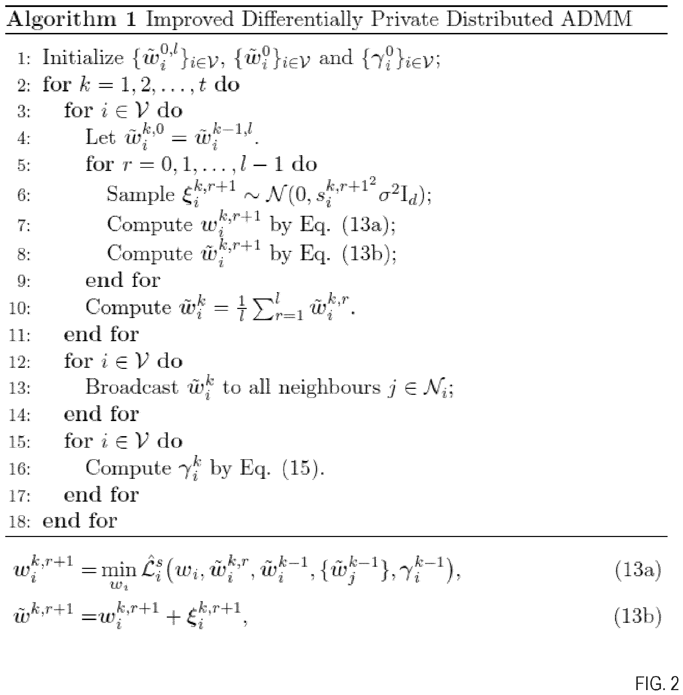

Many benefits can be expected, such as matching, automatic control, and AI-based medical treatment, using e-mails in personal terminals, purchase history, company review materials, IoT information, hospital diagnosis information, and other data sets. However, those data sets cannot be actively utilized due to concerns about information security and leakage. As a measure to prevent the leakage of confidential information such as personal information, there is federated learning (or distributed learning) for analyzing data on end user terminals and using know-how only (for example, dual variables) without releasing confidential information. NPL 1 discloses a solution to a drift problem in distributed training of machine learning models: gradient correction of stochastic variance reduction (SVR) is implicitly increased by optimally selecting constraint-strength control parameters in the update process of edge-consensus learning (ECL). Fig. 1 shows algorithm 2 illustrated in NPL 1. NPL 2 discloses a solution where the risk of reproducing original data is reduced by adding noise to a learning model (hereinafter simply referred to as a "model"). Fig. 2 shows algorithm 1 and equations 13a and 13b illustrated in NPL 2.

[Citation List]

[Non Patent Literature]

[NPL 1] Niwa, K., Zhang, G., Kleijn, W.B., Harada, N., Sawada, H., Fujino, A. (2021). Asynchronous Decentralized Optimization With Implicit Stochastic Variance Reduction. Proceedings of the 38th International Conference on Machine Learning, in Proceedings of Machine Learning Research.
[NPL 2] ZonghanH, et al. "Differentially Private ADMM for Convex Distributed Learning: Improved Accuracy via Multi-Step Approximation", arXiv:2005.07890.

[Summary of Invention]

[Technical Problem]

However, although federated learning enables high-speed learning by dispersing the learning into multiple sessions, there is a risk of reproducing the original data using a user-generated model. Moreover, it was unclear to what extent information was exchanged for training machine learning models. Meanwhile, introducing differential privacy into federated learning reduces the risk of reproducing the original data by adding noise to the user-generated model in federated learning. The larger the noise to be added is, the lower the risk of leakage becomes, however also the lower the accuracy of the model to be trained becomes. Existing methods require arbitrary determination of a noise level, leaving the unresolved challenge of reducing the risk of leakage and improving accuracy at the same time.
Further, when training a machine learning algorithm on individual mobile apparatus of users, local datasets owned by users are typically heterogeneous. For example, user A has blood pressure information only, while user B has heart rate information only - in other words, the attributes (labels) of local datasets may vary and have some bias. Additionally, the sizes of datasets may span several orders of magnitude, for example, user A holds datasets of 10 persons but user B has datasets of 3 persons. Since clients involved in federated learning rely on different communication media and different user terminals, computational capabilities and network speed may vary depending on users. The disclosure of NPL 1 also has a challenge that stable federated learning is difficult to perform due to imbalanced distribution of datasets or significant differences in user terminals in terms of computational capabilities and communication efficiency.
Federated learning has several issues and limitations. A first object of the present invention is to implement stable federated learning even when there is imbalanced distribution of datasets or significant differences in user terminals in terms of computational capabilities and communication efficiency.

[Solution to Problem]

A federated learning system according to the present invention includes a plurality of model learning apparatus. Each model learning apparatus is connected to any of the other model learning apparatus via a network. In the federated learning system according to the present invention, a model parameter, a dual variable, a step size, model training data, and a constraint parameter are set to predetermined initial values. Each model learning apparatus includes a mini-batch extraction unit, a model parameter update unit, a dual-variable calculation/transmission unit, a dual-variable reception unit, and a dual-variable setting unit. The mini-batch extraction unit is configured to extract a predetermined amount of data as a mini-batch from the model training data. The model parameter update unit is configured to perform learning using a dual variable, a step size, a mini-batch of model training data, a constraint parameter, and a coefficient $\gamma$ using a predetermined optimal value $\eta$ and a predetermined hyperparameter $\alpha$, thereby updating a model parameter. The dual-variable calculation/transmission unit is configured to calculate and transmit a dual variable using the model parameter updated by the model parameter update unit and a coefficient $\gamma$ for each other model learning apparatus connected to the model learning apparatus. The dual-variable reception unit is configured to receive a dual variable from the other model learning apparatus connected to the model learning apparatus. The dual-variable setting unit is configured to set the received dual variable as a dual variable to be used for the next learning.

[Advantageous Effects of Invention]

According to the federated learning of the present invention, the model parameter update unit of the model learning apparatus updates the model parameter with the coefficient $\gamma$ using a predetermined optimal value $\eta$ and the predetermined hyperparameter $\alpha$. Furthermore, the dual-variable calculation/transmission unit calculates and transmits a dual variable using the updated model parameter and the coefficient $\gamma$ for each other model learning apparatus connected to the model learning apparatus. Since it is adjustable to what extent the model parameters are updated based on the coefficient $\gamma$, it is possible to enable stable federated learning even when suffered by imbalanced distribution of datasets or significant differences in user terminals in terms of computational capabilities and communication efficiency.

[Brief Description of Drawings]

[Fig. 1] Fig. 1 is a diagram illustrating algorithm 2 shown in NPL 1.
[Fig. 2] Fig. 2 is a diagram illustrating algorithm 1 and equations 13a and 13b shown in NPL 2.
[Fig. 3] Fig. 3 is a diagram illustrating a configuration example of a federated learning system according to Example 1.
[Fig. 4] Fig. 4 is a diagram illustrating an example in which model learning apparatus of the present invention are connected in a ring shape.
[Fig. 5] Fig. 5 is a diagram illustrating an example in which model learning apparatus of the present invention are randomly connected.
[Fig. 6] Fig. 6 is a diagram illustrating an example of a processing flow of the federated learning system according to Example 1.
[Fig. 7] Fig. 7 is a diagram illustrating a configuration example of a federated learning system proposed by Example 2.
[Fig. 8] Fig. 8 is a diagram illustrating an example of a processing flow of a federated learning system according to Example 2.
[Fig. 9] Fig. 9 is a diagram illustrating of an algorithm of a federated learning system 20 according to Example 2 using the same description as in NPL 1.
[Fig. 10] Fig. 10 is a diagram illustrating a functional configuration example of a computer.

[Description of Embodiments]

The following describes an embodiment of the present invention in detail. Note that constituent elements having the same functions are denoted by the same reference numerals and redundant explanations thereof will be omitted.

[Example 1]

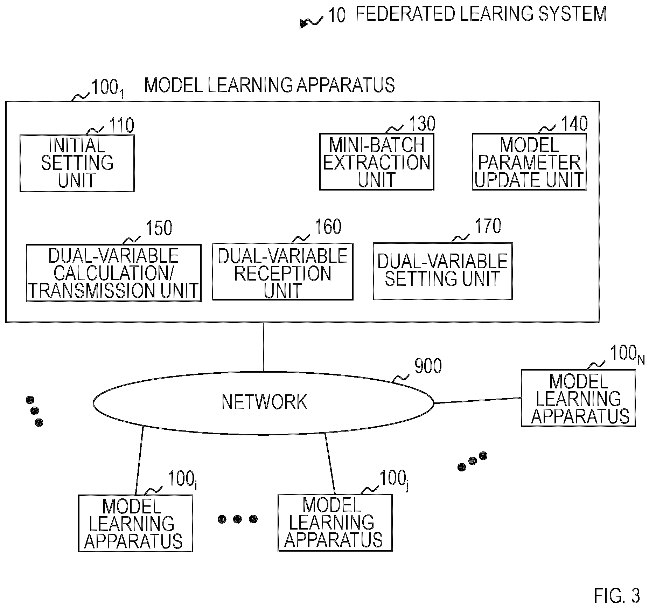

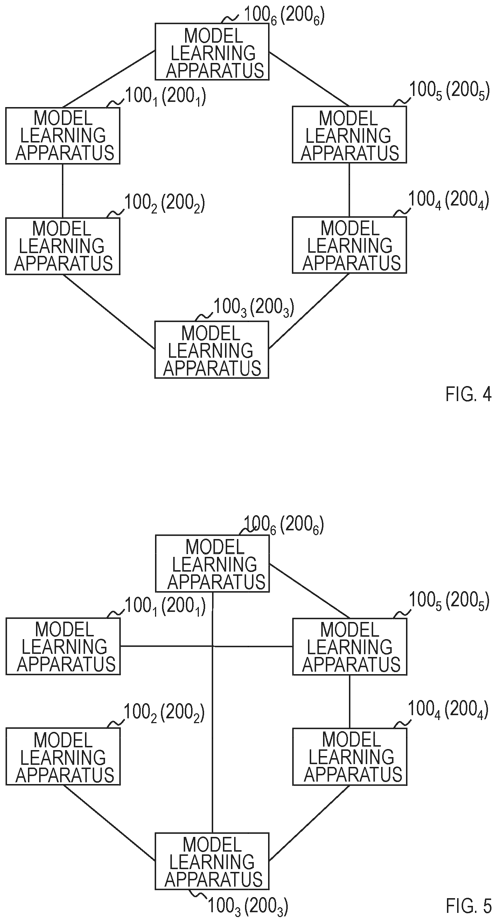

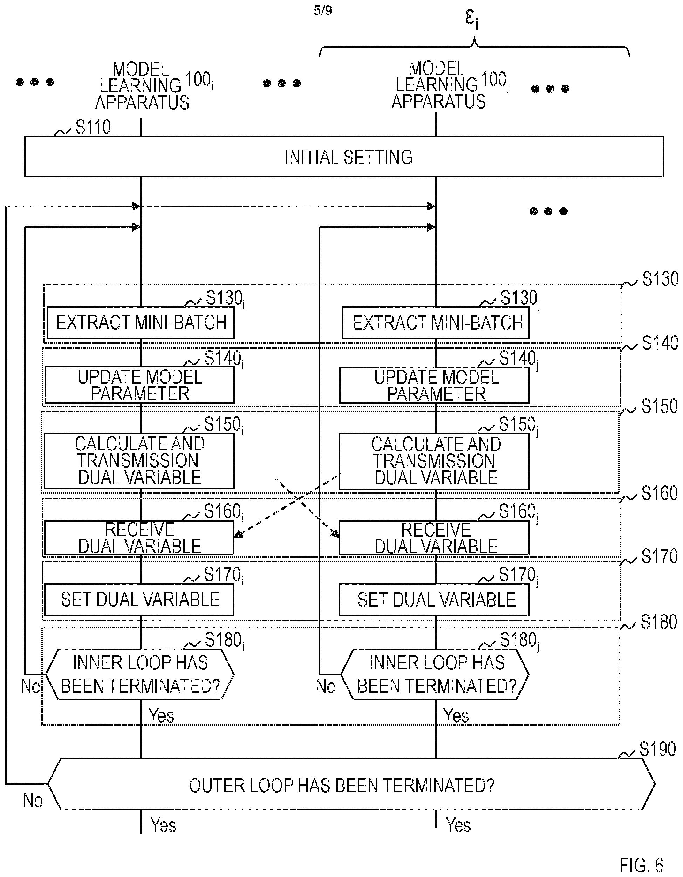

Fig. 3 is a diagram illustrating a configuration example of a federated learning system according to Example 1. Fig. 4 is a diagram illustrating an example in which model learning apparatus of the present invention are connected in a ring shape, and Fig. 5 is a diagram illustrating an example in which model learning apparatus of the present invention are randomly connected. Fig. 6 is a diagram illustrating an example of a processing flow of the federated learning system according to Example 1. A federated learning system 10 of Example 1 includes N model learning apparatus $100_1$, ..., $100_N$. Each model learning apparatus $100_i$ is connected to any of the other model learning apparatus $100_j$ via a network 900. N is an integer equal to or greater than 2, i is an integer in a range between 1 and N, inclusive, and j is an integer in a range between 1 and N, inclusive, but different from i. Each model learning apparatus $100_i$ includes an initial setting unit 110, a mini-batch extraction unit 130, a model parameter update unit 140, a dual-variable calculation/transmission unit 150, a dual-variable reception unit 160, and a dual-variable setting unit 170.

In the initial setting unit 110 of each of the model learning apparatus $100_1$, ..., $100_N$, a model parameter $w_i$, a dual variable $z_{i|j}$, a step size $\mu$, model training data $x_i$, and a constraint parameter $A_{i|j}$ are set to predetermined initial values (S110). For example, $w_1$, ... $w_N$ are set to the same value, while $z_{i|j}$ is set to 0.

The mini-batch extraction unit 130 of each of the model learning apparatus $100_1$, ..., $100_N$ extracts a predetermined amount of data as a mini-batch $\xi_i^{r,k}$ from the model training data $x_i$ (S130). For example, when the pieces of training data are 10,000, 500 or 1000 mini-patches may be arbitrarily extracted. i at the bottom right of $\xi$ indicates the number of the model learning apparatus. k at the upper right of $\xi$ is an integer indicating the number of repetitions of iterative process (inner loop process) performed by each of the model learning apparatus $100_1$, ..., $100_N$. In the inner loop process, the process is repeated K times. K is an integer of 2 or greater, and k is an integer in a range between 1 and K, inclusive. r at the upper right of $\xi$ is an integer indicating the number of repetitions of iterative process in the inner loop process for the entire federated learning system (outer loop process). In the outer loop process, the process is repeated R times. R is an integer of 2 or greater, and r is an integer in a range between 1 and R, inclusive. In the following explanation as well, i and j at the lower right of the symbol indicate the number of the model learning apparatus, r at the upper right of the symbol indicates the number of repetitions in the outer loop process, and k at the upper right of the symbol indicates the number of repetitions in the inner loop process. For the specification, a lower right symbol and an upper right symbol cannot be placed at the same position in the horizontal direction, so they are deviated. On the other hand, they are placed at the same position in the horizontal direction for mathematical equations and drawings in the specification.

The model parameter update unit 140 of each of the model learning apparatus $100_1$, ..., $100_N$ performs learning using the dual variable, the step size, the mini-batch of model training data, the constraint parameter, and a coefficient $\gamma$ using a predetermined optimal value $\eta$ and a predetermined hyperparameter $\alpha$, thereby updating the model parameter (S140). Specifically, the model parameter update unit 140 updates the model parameter as shown in the following equation, and obtains a model parameter $w_i^{r,k+1}$ to be used in the next process.

[Math. 1]

$$w_i^{r,k+1} = argmin_u \left( \bar{f}\left(u, \xi_i^{r,k}\right) \right.$$

$$\left. + \frac{\eta}{2\gamma} \sum_{j \in N} \left\| A_{i|j}(u) - z_{i|j}^{r,k} \right\|^2 \right)$$

wherein f⁻ denotes a cost function or a function that can replace the cost function, u denotes the model parameter before update, $\xi_i^{r,k}$ denotes the mini-batch of model training data, the coefficient $\gamma$ is $1+\alpha\eta$, N denotes the number of model learning apparatus constituting the federated learning system, $A_{i|j}$ denotes the constraint parameter, and $z_{i|j}^r$ denotes the dual variable. $w_i^{r,k+1}$ denotes the model parameter, which refers to k+1-th process in the inner loop. Note that "-" in "f-" should be placed above "f", but due to limitations in the specification, it is written as "f-".

The predetermined optimal value $\eta$ may be $1/(\mu K E_i)$. $E_i$ is the number of other model learning apparatus connected to the model learning apparatus $100_i$. The predetermined hyperparameter $\alpha$ may be, but not limited to, 2. Since different $\alpha$ is suitable for each federated system, it may be appropriately tailored to each federated learning system. The same functions and parameters as in NPL 1 may be used as f⁻, the cost function or the function that can replace the cost function, the model parameter u, the constraint parameter $A_{i|j}$ and others. For example, the following function $q_i(w_i)$ described in "4.1. Problem Definition" of NPL 1 may be used as the function f⁻:

[Math. 2]

$$q_i(w_i) = f_i\left(w_i^{r,k}\right) + \left\langle g_i\left(w_i^{r,k}\right), w_i - w_i^{r,k} \right\rangle$$

$$+ \frac{1}{2\mu} \left\| w_i - w_i^{r,k} \right\|^2$$

wherein, $g_i$ denotes a differential function of the cost function $f_i$.

The dual-variable calculation/transmission unit 150 of each of the model learning apparatus $100_1$, ..., $100_N$ calculates and transmits the dual variable $y_{i|j}$ using the model parameter $w_i^{r,k+1}$ updated by the model parameter update unit 140 and the coefficient $\gamma$ for each other model learning apparatus $100_j$ connected to the model learning apparatus $100_i$ (S150). Specifically, the dual-variable calculation/transmission unit 150 calculates the dual variable $y_{i|j}$ as shown in the following equation. Note that there is at least one other model learning apparatus $200_j$, but there may be two or more. The arrow in the equation means substitution.

[Math. 3]

$$y_{i|j} \leftarrow \frac{1}{\gamma}\left\{(1 - \alpha\eta)z_{i|j}^{r,k} - 2A_{i|j}\left(w_i^{r,k+1}\right)\right\}$$

The dual-variable reception unit 160 of each of the model learning apparatus $100_1$, ..., $100_N$ receives a dual variable $y_{j|i}$ from the other model learning apparatus $100_j$ connected to the model learning apparatus $100_i$ (S160). Since the dual variable $y_{j|i}$ received by the dual-variable reception unit 160 is calculated and transmitted by the dual-variable calculation/transmission unit 150 of the model learning apparatus $100_j$, the positions of "j" and "i" are reversed as compared with the dual variable $y_{i|j}$ transmitted by the dual-variable calculation/transmission unit 150.

The dual-variable setting unit 170 of each of the model learning apparatus $100_1$, ..., $100_N$ sets the received dual variable $y_{j|i}$ as a dual variable $z_{i|j}^{r,k+1}$ to be used for the next learning (S170). The dual-variable setting unit 170 may set the received dual variable $y_{j|i}$ as a dual variable $z_{i|j}^{r,k+1}$ to be used for the next learning as shown in the following equation:

[Math. 4]

$$z_{i|j}^{r,k+1} \leftarrow y_{j|i}$$

Each of the model learning apparatus $100_1$, ..., $100_N$ confirms whether the inner loop process has been terminated, and if it has not been terminated (NO), it continues to repeat the iterative process, and if it has been terminated (YES), proceeds to confirm the outer loop process (S180). When YES for step S180, each of the model learning apparatus $100_1$, ..., $100_N$ confirms whether the outer loop process has been terminated, and if it has not been terminated (NO), it continues to repeat the iterative process, and if it has been terminated (YES), proceeds to terminate the process (S190).

According to the federated learning system 10, the model parameter update unit 140 of the model learning apparatus $100_1$, ..., $100_N$ updates the model parameter $w_i^{r,k+1}$ with the coefficient $\gamma$ using a predetermined optimal value $\eta$ and the predetermined hyperparameter $\alpha$. Furthermore, the dual-variable calculation/transmission unit 150 calculates and transmits a dual variable using the updated model parameter and the coefficient $\gamma$ for each other model learning apparatus $100_j$ connected to the model learning apparatus $100_i$. Since it is adjustable to what extent the model parameters are updated based on the coefficient $\gamma$, it is possible to enable stable federated learning even when suffered by imbalanced distribution of datasets or significant differences in user terminals in terms of computational capabilities and communication efficiency.

[Example 2]

Example 1 is a solution for the first object of the present invention, i.e. "implementation of stable federated learning even when suffered by imbalanced distribution of datasets or significant differences in user terminals in terms of computational capabilities and communication efficiency". With additional limitations to the solution for the first object, it is also possible to address another challenge of "reducing a risk of leakage and improving accuracy at the same time". Therefore, a second object for Example 2 is to "achieve both leakage risk reduction and accuracy improvement".

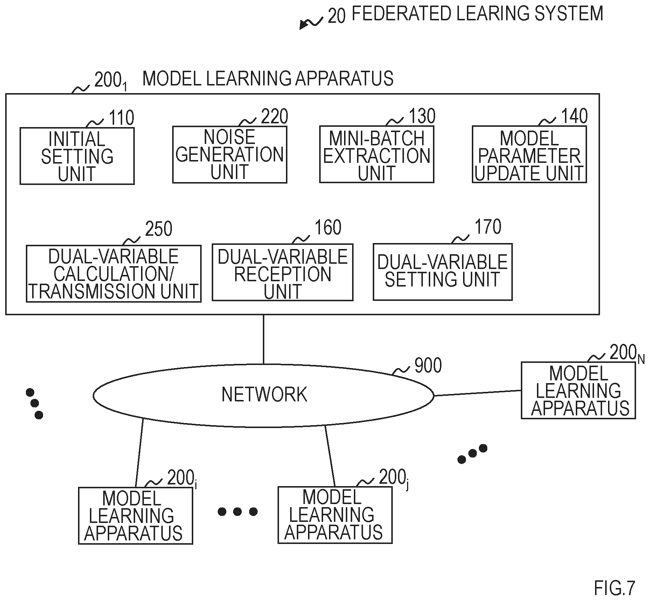

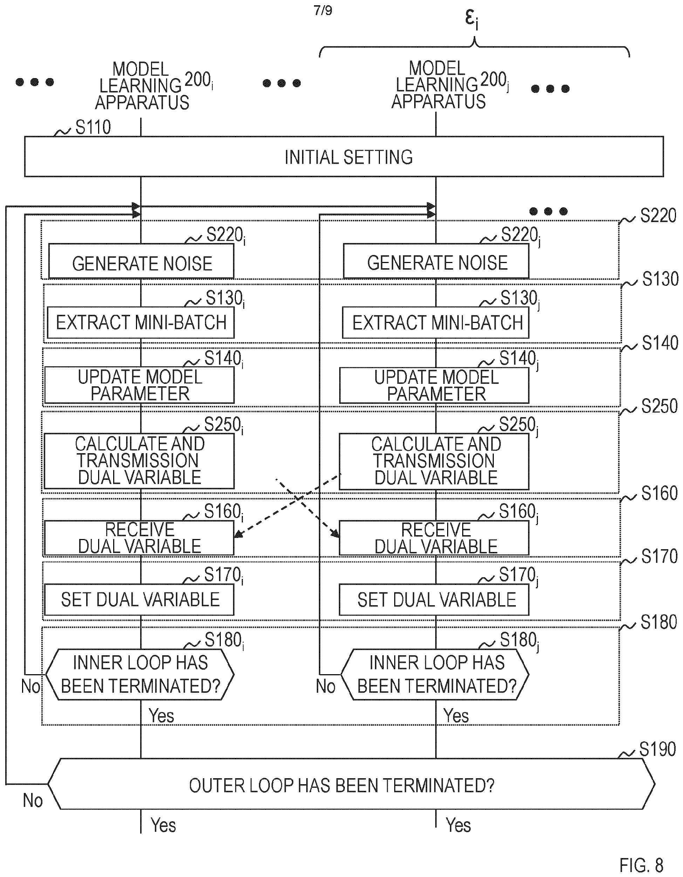

Fig. 7 is a diagram illustrating a configuration example of a federated learning system according to Example 2. Fig. 4 is a diagram illustrating an example in which model learning apparatus of the present invention are connected in a ring shape, and Fig. 5 is a diagram illustrating an example in which model learning apparatus of the present invention are randomly connected. Fig. 8 is a diagram illustrating an example of a processing flow of the federated learning system according to Example 2. A federated learning system 20 of Example 2 includes N model learning apparatus $200_1$, ..., $200_N$. Each model learning apparatus $200_i$ is connected to any of the other model learning apparatus $200_j$ via a network. Each model learning apparatus $200_i$ includes an initial setting unit 110, a noise generation unit 220, a mini-batch extraction unit 130, a model parameter update unit 140, a dual-variable calculation/transmission unit 250, a dual-variable reception unit 160, and a dual-variable setting unit 170.

The processing (S130) of the initial setting unit 110 and the mini-batch extraction unit 130 of each of the model learning apparatus $200_1$, ..., $200_N$ is the same as in Example 1. The noise generation unit 220 of each of the model learning apparatus $200_1$, ..., $200_N$ generates noise $n_i$ (S220). Specifically, Gaussian noise $n_i$ may be generated based on a predetermined variance $\sigma^2$.

The model parameter update unit 140 of each of the model learning apparatus $200_1$, ..., $200_N$ performs learning using the dual variable, the step size, the mini-batch of model training data, the constraint parameter, and a coefficient $\gamma$ using a predetermined optimal value $\eta$ and a predetermined hyperparameter $\alpha$, thereby updating the model parameter (S140). Specifically, the model parameter update unit 140 updates the model parameter as shown in the following equation, and obtains a model parameter $w_i^{r,k+1}$ to be used in the next process.

[Math. 5]

$$
w_i^{r,k+1} = argmin_u \left( \bar{f}\left(u, \xi_i^{r,k}\right) \right.
$$

$$
\left. + \frac{\eta}{2\gamma} \sum_{j \in N} \left\| A_{i|j}(u) - z_{i|j}^{r,k} \right\|^2 \right)
$$

wherein f' denotes a cost function or a function can replace the cost function, u denotes the model parameter before update, $\xi_i^{r,k}$ denotes the mini-batch of model training data, the coefficient $\gamma$ is $1+\alpha\eta$, N denotes the number of model learning apparatus constituting the federated learning system, $A_{i|j}$ denotes the constraint parameter, and $z_{i|j}^r$ denotes the dual variable. $w_i^{r,k+1}$ denotes the model parameter, which refers to k+1-th process in the inner loop. The processing of the model parameter update unit 140 is the same as that of Example 1. Since noise is added to the dual variable $z_{i|j}^r$ by the dual-variable calculation/transmission unit 250, which will be described later, $\gamma$ also plays a role in adjusting the influence of noise when updating the model parameter $w_i^{r,k+1}$.

The dual-variable calculation/transmission unit 250 of each of the model learning apparatus $200_1$, ..., $200_N$ calculates and transmits the dual variable $y_{i|j}$ with noise added using the model parameter $w_i^{r,k+1}$ updated by the model parameter update unit 140 and the coefficient $\gamma$ for each other model learning apparatus $200_j$ connected to the model learning apparatus $200_i$. Note that there is at least one other model learning apparatus $200_j$, but there may be two or more. Specifically, the dual-variable calculation/transmission unit 250 calculates the dual variable $y_{i|j}$ with noise added as shown in the following equation.

[Math. 6]

$$
y_{i|j} \leftarrow \frac{1}{\gamma} \left\{ (1 - \alpha\eta) z_{i|j}^{r,k} - 2A_{i|j}\left(w_i^{r,k+1} + n_i\right) \right\}
$$

wherein $n_i$ denotes noise generated by the noise generation unit 220. $\gamma$ of the dual-variable calculation/transmission unit 250 plays the role of adjusting the influence of noise and the role of preventing information leakage.

The processing (S160) of the dual-variable reception unit 160 and the processing (S170) of the dual-variable setting unit 170 are the same as those in Example 1. As in Example 1, the inner loop process is confirmed (S180) and the outer loop process is confirmed (S190), and the iterative process is executed.

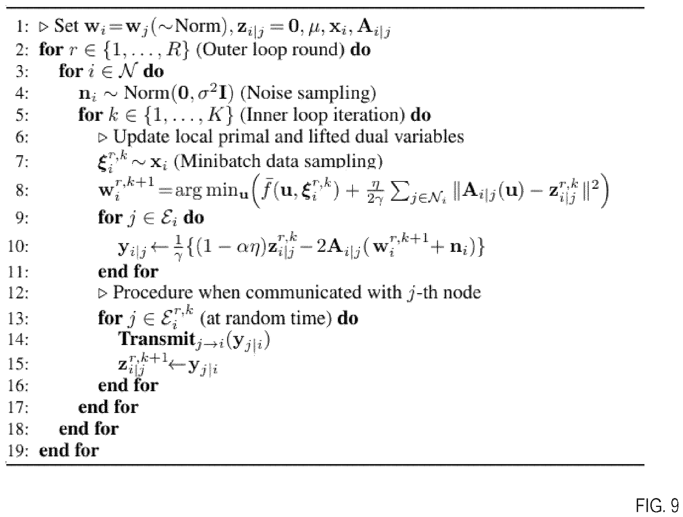

Fig. 9 is a diagram illustrating of algorithm of the federated learning system 20 according to Example 2 using the same description as in NPL 1. According to the federated learning system 20, since no noise is added to $\xi_i^{r,k}$, it is possible to reduce the influence of noise that inhibits learning, thereby improving accuracy of model learning. On the other hand, since noise is added to the dual variable $y_{i|j}$ transmitted to other model learning apparatus $200_j$, the risk of information leakage can be reduced. Accordingly, it is possible to provide a solution for "achievement of both leakage risk reduction and accuracy improvement", in addition to the solution for the first object i.e. "implementation of stable federated learning even when suffered by imbalanced distribution of datasets or significant differences in user terminals in terms of computational capabilities and communication efficiency".

[Program and Recording Medium]

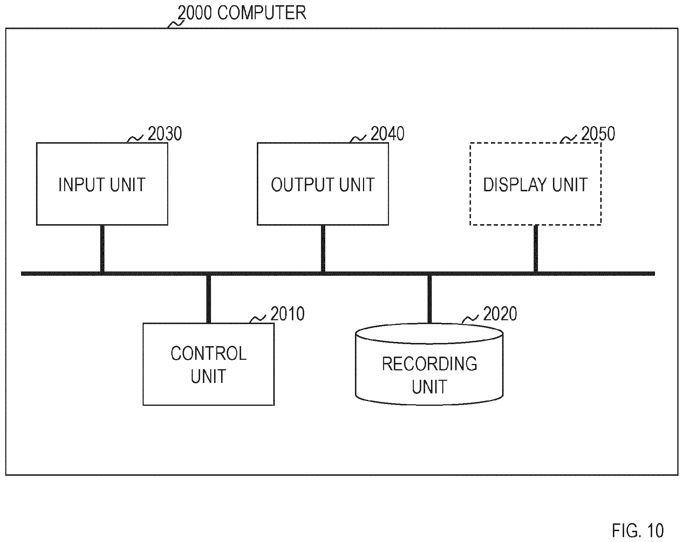

The various types of processing described above can be performed by causing a recording unit 2020 of a computer 2000 shown in Fig. 10 to read a program for executing each step of the above method, and allowing a control unit 2010, an input unit 2030, an output unit 2040, and a display unit 2050 to perform operations.

A program describing this processing can be recorded on a computer-readable recording medium. An example of the computer-readable recording medium may include any recording medium such as a magnetic recording device, an optical disc, a magneto-optical recording medium, and a semiconductor memory.

The program is distributed, for example, by sales, transfer, or lending of a portable recording medium such as a DVD or a CD-ROM on which the program is recorded. In addition, the distribution of the program may be performed by storing the program in advance in a storage device of a server computer and transferring the program from the server computer to another computer via a network.

The computer that executes such a program first temporarily stores, for example, the program recorded on the portable recording medium or the program transferred from the server computer in a storage device of the computer. Furthermore, when processing is performed, the computer reads the program stored in the own recording medium and performs the processing in accordance with the read program. In addition, as another execution mode of the program, a computer may directly read the program from a portable recording medium and execute processing in accordance with the program. Further, whenever the program is transmitted from the server computer to the computer, the processing may be performed in order in accordance with the received program. Instead of transferring the program from the server computer to the computer, the above-described processing may be executed by a so-called application service provider (ASP) service, in which a processing function is implemented in response to an execution command and in accordance with result acquisition alone. The program in this example includes information to be provided for processing by a computer and information equivalent to the program (data which is not a direct command to the computer but has a property that defines the processing of the computer).

Although the present invention is configured by executing a predetermined program on the computer in this embodiment, at least a part of the processing may be implemented by hardware.

[Reference Signs List]

10, 20 Federated learning system
100,200 Model learning apparatus
110 Initial setting unit
130 Mini-batch extraction unit
140 Model parameter update unit
150, 250 Dual-variable calculation/transmission unit
160 Dual-variable reception unit
170 Dual-variable setting unit
220 Noise generation unit

**Claims**

1. A federated learning system including a plurality of model learning apparatus, each model learning apparatus being connected to any of the other model learning apparatus via a network, wherein

a model parameter, a dual variable, a step size, model training data, and a constraint parameter are set to predetermined initial values, and
each model learning apparatus comprises:

a mini-batch extraction unit configured to extract a predetermined amount of data as a mini-batch from the model training data;
a model parameter update unit configured to perform learning using a dual variable, a step size, a mini-batch of model training data, a constraint parameter, and a coefficient $\gamma$ using a predetermined optimal value $\eta$ and a predetermined hyperparameter $\alpha$, thereby updating a model parameter;
a dual-variable calculation/transmission unit configured to calculate and transmit a dual variable using the model parameter updated by the model parameter update unit and a coefficient $\gamma$ for each other model learning apparatus connected to the model learning apparatus;
a dual-variable reception unit configured to receive a dual variable from the other model learning apparatus connected to the model learning apparatus; and

a dual-variable setting unit configured to set the received dual variable as a dual variable to be used for the next learning.

2. A federated learning system including a plurality of model learning apparatus, each model learning apparatus being connected to any of the other model learning apparatus via a network, wherein

a model parameter, a dual variable, a step size, model training data, and a constraint parameter are set to predetermined initial values, and
each model learning apparatus comprises:

a noise generation unit configured to generate noise;
a mini-batch extraction unit configured to extract a predetermined amount of data as a mini-batch from the model training data;
a model parameter update unit configured to perform learning using a dual variable, a step size, a mini-batch of model training data, constraint parameters, a coefficient $\gamma$ using a predetermined optimal value $\eta$ and a predetermined hyperparameter $\alpha$, thereby updating a model parameter;
a dual-variable calculation/transmission unit configured to calculate and transmit a dual variable with the noise added using the model parameter updated by the model parameter update unit and a coefficient $\gamma$ for each other model learning apparatus connected to the model learning apparatus;
a dual-variable reception unit configured to receive a dual variable from the other model learning apparatus connected to the model learning apparatus; and
a dual-variable setting unit configured to set the received dual variable as a dual variable to be used for the next learning.

3. A model learning apparatus constituting a federated learning system including a plurality of model learning apparatus, each model learning apparatus being connected to any of the other model learning apparatus via a network, wherein

a model parameter, a dual variable, a step size, model training data, and a constraint parameter are set to predetermined initial values, and
the model learning apparatus comprises:

a mini-batch extraction unit configured to extract a predetermined amount of data as a mini-batch from the model training data;
a model parameter update unit configured to perform learning using a dual variable, a step size, a mini-batch of model training data, a constraint parameter, and a coefficient $\gamma$ using a predetermined optimal value $\eta$ and a predetermined hyperparameter $\alpha$, thereby updating a model parameter;
a dual-variable calculation/transmission unit configured to calculate and transmit a dual variable using the model parameter updated by the model parameter update unit and a coefficient $\gamma$ for each other model learning apparatus connected to the model learning apparatus;
a dual-variable reception unit configured to receive a dual variable from the other model learning apparatus connected to the model learning apparatus; and
a dual-variable setting unit configured to set the received dual variable as a dual variable to be used for the next learning.

4. The model learning apparatus according to claim 3, wherein the model parameter update unit is configured to update a model parameter $w_i^{r,k+1}$ as follows:

[Math. 7]

$$w_i^{r,k+1} = argmin_u \left( \bar{f}\left(u, \xi_i^{r,k}\right) \right.$$

$$\left. + \frac{\eta}{2\gamma} \sum_{j \in N} \left\| A_{i|j}(u) - z_{i|j}^{r,k} \right\|^2 \right)$$

provided that $w_i^{r,k+1}$ denotes a model parameter, r denotes the number of repetitions of learning in the entire federated learning system, k denotes the number of learning iterations within the model learning apparatus, i and j each are symbols indicating model learning apparatus, f̄ denotes a cost function or a function can replace the cost function, u denotes a model parameter before update, $\xi_i^{r,k}$ denotes a mini-batch of model training data, a coefficient $\gamma$ is $1+\alpha\eta$, N denotes the number of model learning apparatus constituting the federated learning system, $A_{i|j}$ denotes a constraint parameter, and $z_{i|j}^r$ denotes a dual variable, and

the dual-variable calculation/transmission unit is configured to calculate a dual variable as follows:

[Math. 8]

$$y_{i|j} \leftarrow \frac{1}{\gamma}\left\{(1-\alpha\eta)z_{i|j}^{r,k} - 2A_{i|j}\left(w_i^{r,k+1}\right)\right\}$$

provided that $y_{i|j}$ denotes a dual variable.

5. A model learning apparatus constituting a federated learning system including a plurality of model learning apparatus, each model learning apparatus being connected to any of the other model learning apparatus via a network, wherein

a model parameter, a dual variable, a step size, model training data, and a constraint parameter are set to predetermined initial values, and
the model learning apparatus comprises:

a noise generation unit configured to generate noise;
a mini-batch extraction unit configured to extract a predetermined amount of data as a mini-batch from the model training data;
a model parameter update unit configured to perform learning using a dual variable, a step size, a mini-batch of model training data, constraint parameters, a coefficient $\gamma$ using a predetermined optimal value $\eta$ and a predetermined hyperparameter $\alpha$, thereby updating a model parameter;
a dual-variable calculation/transmission unit configured to calculate and transmit a dual variable with the noise added using the model parameter updated by the model parameter update unit and a coefficient $\gamma$ for each other model learning apparatus connected to the model learning apparatus;
a dual-variable reception unit configured to receive a dual variable from the other model learning apparatus connected to the model learning apparatus; and
a dual-variable setting unit configured to set the received dual variable as a dual variables to be used for the next learning.

6. The model learning apparatus according to claim 5, wherein the model parameter update unit is configured to update a model parameter $w_i^{r,k+1}$ as follows:

[Math. 9]

$$w_i^{r,k+1} = argmin_u\left(\bar{f}\left(u, \xi_i^{r,k}\right)\right.$$

$$\left. + \frac{\eta}{2\gamma}\sum_{j\in N}\left\|A_{i|j}(u) - z_{i|j}^{r,k}\right\|^2\right)$$

provided that $w_i^{r,k+1}$ denotes a model parameter, r denotes the number of repetitions of learning in the entire federated learning system, k denotes the number of learning iterations within the model learning apparatus, i and j each are symbols indicating model learning apparatus, f̄ denotes a cost function or a function can replace the cost function, u denotes a model parameter before update, $\xi_i^{r,k}$ denotes a mini-batch of model training data, a coefficient $\gamma$ is $1+\alpha\eta$, N denotes the number of model learning apparatus constituting the federated learning system, $A_{i|j}$ denotes a constraint parameter, and $z_{i|j}^r$ denotes a dual variable, and
the dual-variable calculation/transmission unit is configured to calculate a dual variable with noise added as follows:

[Math. 10]

$$y_{i|j} \leftarrow \frac{1}{\gamma}\left\{(1-\alpha\eta)z_{i|j}^{r,k} - 2A_{i|j}\left(w_i^{r,k+1} + n_i\right)\right\}$$

provided that $y_{i|j}$ denotes a dual variable with noise added, and $n_i$ denotes noise generated by the noise generation unit.

7. A federated learning method using a federated learning system including a plurality of model learning apparatus, each model learning apparatus being connected to any of the other model learning apparatus via a network, wherein

a model parameter, a dual variable, a step size, model training data, and a constraint parameter are set to predetermined initial values, and
each model learning apparatus has an inner loop process for executing the following steps a first predetermined number of times:

a model parameter update step of performing learning using a dual variable, a step size, a mini-batch of model training data, a constraint parameter, and a coefficient $\gamma$ using a predetermined optimal value $\eta$ and a predetermined hyperparameter $\alpha$, thereby updating a model parameter;
a dual-variable calculation/transmission step of calculating and transmitting a dual variable using the model parameter updated in the model parameter update step and a coefficient $\gamma$ for each other model learning apparatus connected to the model learning apparatus;
a dual-variable reception step of receiving a dual variable from the other model learning apparatus connected to the model learning apparatus; and
a dual-variable setting step of setting the received dual variable as a dual variable to be used for the next learning, and
also has an outer loop process for executing the inner loop process a second predetermined number of times.

8. A program for causing a computer to function as the model learning apparatus of any one of claims 3 to 6.

**Algorithm 2** Proposed ECL-ISVR

1: ▷ Set $w_i = w_j (\sim \text{Norm}), z_{i|j} = 0, \mu, x_i, \mathbf{A}_{i|j}$
2: **for** $r \in \{1, \ldots, R\}$ (Outer loop round) **do**
3:    **for** $i \in \mathcal{N}$ **do**
4:       **for** $k \in \{1, \ldots, K\}$ (Inner loop iteration) **do**
5:         ▷ Stochastic gradient calculation
6:         $g_i(w_i) \leftarrow \nabla f_i(w_i, \chi_i)$
7:         ▷ Update local primal and lifted dual variables
8:         $w_i \leftarrow [w_i - \mu[g_i(w_i^{r,k}) + \frac{1}{\mu K E_i}\{\sum_{j \in \mathcal{E}_i}$
              $(w_i^{r,k} - \mathbf{A}_{i|j}^{\mathrm{T}} z_{i|j}^{r,k}) - \mu E_i g_i(w_i^{r,k})\}]$
9:         **for** $j \in \mathcal{E}_i$ **do**
10:           $y_{i|j} \leftarrow z_{i|j} - 2\mathbf{A}_{i|j} w_i$
11:         **end for**
12:         ▷ Procedure when communicated with $j$-th node
13:         **for** $j \in \mathcal{E}_i^{r,k}$ (at random time) **do**
14:           **communicate**$_{j \to i}(y_{j|i})$
15:           $z_{i|j} \leftarrow \begin{cases} y_{j|i} & \text{(PDMM-ISVR)} \\ \frac{1}{2}z_{i|j} + \frac{1}{2}y_{j|i} & \text{(ADMM-ISVR)} \end{cases}$
16:         **end for**
17:       **end for**
18:    **end for**
19: **end for**

FIG. 1

**Algorithm 1** Improved Differentially Private Distributed ADMM

1: Initialize $\{\tilde{w}_i^{0,l}\}_{i\in\mathcal{V}}$, $\{\tilde{w}_i^0\}_{i\in\mathcal{V}}$ and $\{\gamma_i^0\}_{i\in\mathcal{V}}$;
2: **for** $k = 1, 2, \ldots, t$ **do**
3:     **for** $i \in \mathcal{V}$ **do**
4:         Let $\tilde{w}_i^{k,0} = \tilde{w}_i^{k-1,l}$.
5:         **for** $r = 0, 1, \ldots, l - 1$ **do**
6:             Sample $\xi_i^{k,r+1} \sim \mathcal{N}(0, s_i^{k,r+1^2}\sigma^2 \mathrm{I}_d)$;
7:             Compute $w_i^{k,r+1}$ by Eq. (13a);
8:             Compute $\tilde{w}_i^{k,r+1}$ by Eq. (13b);
9:         **end for**
10:         Compute $\tilde{w}_i^k = \frac{1}{l}\sum_{r=1}^l \tilde{w}_i^{k,r}$.
11:     **end for**
12:     **for** $i \in \mathcal{V}$ **do**
13:         Broadcast $\tilde{w}_i^k$ to all neighbours $j \in \mathcal{N}_i$;
14:     **end for**
15:     **for** $i \in \mathcal{V}$ **do**
16:         Compute $\gamma_i^k$ by Eq. (15).
17:     **end for**
18: **end for**

$$w_i^{k,r+1} = \min_{w_i} \hat{\mathcal{L}}_i^s\big(w_i, \tilde{w}_i^{k,r}, \tilde{w}_i^{k-1}, \{\tilde{w}_j^{k-1}\}, \gamma_i^{k-1}\big), \tag{13a}$$

$$\tilde{w}^{k,r+1} = w_i^{k,r+1} + \xi_i^{k,r+1}, \tag{13b}$$

FIG. 2

10 FEDERATED LEARING SYSTEM

100₁ MODEL LEARNING APPARATUS

| INITIAL SETTING UNIT 110 | | MINI-BATCH EXTRACTION UNIT 130 | MODEL PARAMETER UPDATE UNIT 140 |
| --- | --- | --- | --- |
| DUAL-VARIABLE CALCULATION/ TRANSMISSION UNIT 150 | DUAL-VARIABLE RECEPTION UNIT 160 | DUAL-VARIABLE SETTING UNIT 170 | |

NETWORK 900

100ₙ MODEL LEARNING APPARATUS

100ᵢ MODEL LEARNING APPARATUS

100ⱼ MODEL LEARNING APPARATUS

FIG. 3

$100_6$ $(200_6)$

MODEL LEARNING APPARATUS

$100_1$ $(200_1)$

MODEL LEARNING APPARATUS

$100_5$ $(200_5)$

MODEL LEARNING APPARATUS

$100_2$ $(200_2)$

MODEL LEARNING APPARATUS

$100_4$ $(200_4)$

MODEL LEARNING APPARATUS

$100_3$ $(200_3)$

MODEL LEARNING APPARATUS

FIG. 4

$100_6$ $(200_6)$

MODEL LEARNING APPARATUS

$100_1$ $(200_1)$

MODEL LEARNING APPARATUS

$100_5$ $(200_5)$

MODEL LEARNING APPARATUS

$100_2$ $(200_2)$

MODEL LEARNING APPARATUS

$100_4$ $(200_4)$

MODEL LEARNING APPARATUS

MODEL LEARNING APPARATUS

$100_3$ $(200_3)$

FIG. 5

$$\varepsilon_i$$

MODEL
LEARNING $100_i$
APPARATUS

• • •

MODEL
LEARNING $100_j$
APPARATUS

• • •

$\sim$ S110

INITIAL SETTING

• • •

$\sim$ S130_i

EXTRACT MINI-BATCH

$\sim$ S130_j

EXTRACT MINI-BATCH

$\sim$ S130

$\sim$ S140_i

UPDATE MODEL
PARAMETER

$\sim$ S140_j

UPDATE MODEL
PARAMETER

$\sim$ S140

$\sim$ S150_i

CALCULATE AND
TRANSMISSION
DUAL VARIABLE

$\sim$ S150_j

CALCULATE AND
TRANSMISSION
DUAL VARIABLE

$\sim$ S150

$\sim$ S160_i

RECEIVE
DUAL VARIABLE

$\sim$ S160_j

RECEIVE
DUAL VARIABLE

$\sim$ S160

$\sim$ S170_i

SET DUAL VARIABLE

$\sim$ S170_j

SET DUAL VARIABLE

$\sim$ S170

$\sim$ S180_i

INNER LOOP HAS
BEEN TERMINATED?

No

Yes

$\sim$ S180_j

INNER LOOP HAS
BEEN TERMINATED?

No

Yes

$\sim$ S180

$\sim$ S190

OUTER LOOP HAS BEEN TERMINATED?

No

Yes

Yes

FIG. 6

20 FEDERATED LEARING SYSTEM

200₁ MODEL LEARNING APPARATUS

| 110 INITIAL SETTING UNIT | 220 NOISE GENERATION UNIT | 130 MINI-BATCH EXTRACTION UNIT | 140 MODEL PARAMETER UPDATE UNIT |
|---|---|---|---|

| 250 DUAL-VARIABLE CALCULATION/ TRANSMISSION UNIT | 160 DUAL-VARIABLE RECEPTION UNIT | 170 DUAL-VARIABLE SETTING UNIT |
|---|---|---|

NETWORK 900

200ₙ MODEL LEARNING APPARATUS

200ᵢ MODEL LEARNING APPARATUS

200ⱼ MODEL LEARNING APPARATUS

FIG.7

$$\varepsilon_i$$

MODEL
LEARNING $200_i$
APPARATUS

• • •

MODEL
LEARNING $200_j$
APPARATUS

• • •

S110

INITIAL SETTING

• • • ~ S220

| GENERATE NOISE $\sim$ S220$_i$ | GENERATE NOISE $\sim$ S220$_j$ |

~ S130

| EXTRACT MINI-BATCH $\sim$ S130$_i$ | EXTRACT MINI-BATCH $\sim$ S130$_j$ |

~ S140

| UPDATE MODEL PARAMETER $\sim$ S140$_i$ | UPDATE MODEL PARAMETER $\sim$ S140$_j$ |

~ S250

| CALCULATE AND TRANSMISSION DUAL VARIABLE $\sim$ S250$_i$ | CALCULATE AND TRANSMISSION DUAL VARIABLE $\sim$ S250$_j$ |

~ S160

| RECEIVE DUAL VARIABLE $\sim$ S160$_i$ | RECEIVE DUAL VARIABLE $\sim$ S160$_j$ |

~ S170

| SET DUAL VARIABLE $\sim$ S170$_i$ | SET DUAL VARIABLE $\sim$ S170$_j$ |

~ S180

No  INNER LOOP HAS BEEN TERMINATED? $\sim$ S180$_i$
Yes

No  INNER LOOP HAS BEEN TERMINATED? $\sim$ S180$_j$
Yes

~ S190

No  OUTER LOOP HAS BEEN TERMINATED?
Yes          Yes

FIG. 8

1:  ▷ Set $\mathbf{w}_i = \mathbf{w}_j(\sim \text{Norm}), \mathbf{z}_{i|j} = \mathbf{0}, \mu, \mathbf{x}_i, \mathbf{A}_{i|j}$
2:  **for** $r \in \{1, \ldots, R\}$ (Outer loop round) **do**
3:   **for** $i \in \mathcal{N}$ **do**
4:    $\mathbf{n}_i \sim \text{Norm}(\mathbf{0}, \sigma^2 \mathbf{I})$ (Noise sampling)
5:    **for** $k \in \{1, \ldots, K\}$ (Inner loop iteration) **do**
6:     ▷ Update local primal and lifted dual variables
7:     $\boldsymbol{\xi}_i^{r,k} \sim \mathbf{x}_i$ (Minibatch data sampling)
8:     $\mathbf{w}_i^{r,k+1} = \arg\min_{\mathbf{u}} \left( \bar{f}(\mathbf{u}, \boldsymbol{\xi}_i^{r,k}) + \frac{\eta}{2\gamma} \sum_{j \in \mathcal{N}_i} \|\mathbf{A}_{i|j}(\mathbf{u}) - \mathbf{z}_{i|j}^{r,k}\|^2 \right)$
9:     **for** $j \in \mathcal{E}_i$ **do**
10:      $\mathbf{y}_{i|j} \leftarrow \frac{1}{\gamma}\{(1 - \alpha\eta)\mathbf{z}_{i|j}^{r,k} - 2\mathbf{A}_{i|j}(\mathbf{w}_i^{r,k+1} + \mathbf{n}_i)\}$
11:     **end for**
12:     ▷ Procedure when communicated with $j$-th node
13:     **for** $j \in \mathcal{E}_i^{r,k}$ (at random time) **do**
14:      $\textbf{Transmit}_{j \to i}(\mathbf{y}_{j|i})$
15:      $\mathbf{z}_{i|j}^{r,k+1} \leftarrow \mathbf{y}_{j|i}$
16:     **end for**
17:    **end for**
18:   **end for**
19: **end for**

FIG. 9

2000 COMPUTER

INPUT UNIT ~2030

OUTPUT UNIT ~2040

DISPLAY UNIT ~2050

CONTROL UNIT ~2010

RECORDING UNIT ~2020

FIG. 10

<table>
<tr><td colspan="3"><strong>INTERNATIONAL SEARCH REPORT</strong></td><td>International application No.<br><strong>PCT/JP2022/021390</strong></td></tr>
</table>

**A.    CLASSIFICATION OF SUBJECT MATTER**

*G06N 20/00*(2019.01)i; *G06F 9/46*(2006.01)i; *G06N 3/08*(2006.01)i
FI:    G06N20/00 130; G06F9/46 420Z; G06N3/08

According to International Patent Classification (IPC) or to both national classification and IPC

**B.    FIELDS SEARCHED**

Minimum documentation searched (classification system followed by classification symbols)

G06N20/00-20/20; G06F9/46; G06N3/02-3/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | NIWA, K et al. Edge-consensus Learning: Deep Learning on P2P Networks with Nonhomogeneous Data. KDD '20: Proceedings of the 26th ACM SIGKDD International Conference on Knowledge Discovery & Data Mining [online], 2020, pp. 668-678, [retrieved on 14 June 2022], Retrieved from the Internet: <URL: https://dl.acm.org/doi/10.1145/3394486.3403109>, <DOI: 10.1145/3394486.3403109><br>entire text, all drawings | 1-8 |
| A | WO 2021/059604 A1 (FUJIFILM CORP.) 01 April 2021 (2021-04-01)<br>entire text, all drawings | 1-8 |
| A | US 2021/0073677 A1 (ORACLE INT CORP.) 11 March 2021 (2021-03-11)<br>entire text, all drawings | 1-8 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **14 June 2022** | **28 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/021390**

| Patent document cited in search report | | | Publication date (day/month/year) | Patent family member(s) | Publication date (day/month/year) |
|---|---|---|---|---|---|
| WO | 2021/059604 | A1 | 01 April 2021 | (Family: none) | |
| US | 2021/0073677 | A1 | 11 March 2021 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **NIWA, K.** ; **ZHANG, G.** ; **KLEIJN, W.B.** ; **HARADA, N.** ; **SAWADA, H** ; **FUJINO, A**. Asynchronous Decentralized Optimization With Implicit Stochastic Variance Reduction.. *Proceedings of the 38th International Conference on Machine Learning, in Proceedings of Machine Learning Research*, 2021

- **ZONGHANH et al.** Differentially Private ADMM for Convex Distributed Learning: Improved Accuracy via Multi-Step Approximation. *arXiv*, 2005, 07890